(19) Europäisches Patentamt
European Patent Office
Office européen des brevets

(11) **EP 4 776 613 A1**

(12) **EUROPEAN PATENT APPLICATION**

(43) Date of publication:
**15.07.2026 Bulletin 2026/29**

(21) Application number: **25315014.8**

(22) Date of filing: **14.01.2025**

(51) International Patent Classification (IPC):
*H04N 19/11* (2014.01)    *H04N 19/117* (2014.01)
*H04N 19/176* (2014.01)   *H04N 19/186* (2014.01)
*H04N 19/593* (2014.01)   *H04N 19/82* (2014.01)

(52) Cooperative Patent Classification (CPC):
H04N 19/186; H04N 19/11; H04N 19/117;
H04N 19/176; H04N 19/593; H04N 19/82

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **Beijing Xiaomi Mobile Software Co.,
Ltd.
Beijing 100085 (CN)**

(72) Inventors:
• **Ghaznavi Youvalari, Ramin
Beijing, 100085 (CN)**

• **Abdoli, Mohsen
Beijing, 100085 (CN)**
• **Plowman, Frank
Beijing, 100085 (CN)**
• **Tissier, Alexandre
Beijing, 100085 (CN)**

(74) Representative: **Zimmermann, Tankred Klaus et al
Schoppe, Zimmermann, Stöckeler
Zinkler, Schenk & Partner mbB
Patentanwälte
Radlkoferstrasse 2
81373 München (DE)**

(54) **METHOD AND APPARATUS FOR PROCESSING A PICTURE USING CLIPPED LUMA SAMPLES FOR A CHROMA PREDICTION**

(57)    A method of processing one or more blocks of a picture is described. The method includes predicting one or more chroma samples of a block of the picture using one or more luma samples of the block and one or more cross-component processes. One or more or all of the luma samples are clipped prior to being used in the one or more cross-component processes.

Fig. 19

## Description

### Technical Field

The present disclosure generally relates to the field of encoding/decoding pictures, images or videos, and embodiments of the present disclosure concern improvements for predicting chroma samples of a block of a picture. More specific embodiments of the present disclosure relate to the methods and apparatus for processing a picture using clipped luma samples for a chroma prediction.

### Background

The encoding and decoding of a picture, an image or a video is performed in accordance with a certain standard, for example, in accordance with the ISO/IEC 14496-10 Advanced Video Coding, AVC, standard (see reference [1]), the ISO/IEC 23094-1 Essential video coding, EVC, standard, the ISO/IEC 23008-2 High Efficiency Video Coding, HEVC, standard (see reference [2]), the ISO/IEC 23090-3 Versatile Video Coding, VVC, standard (see reference [3]) or the AOMedia Video 1, AV1, standard.

For processing a picture, an image or a video, e.g., when encoding and/or decoding of the picture, the image or the video, a state-of-the-art process may perform a chroma prediction using cross-component processes and reconstructed luma samples.

Thus, there is a need to provide further improvements for processing a picture, an image or a video, e.g., when encoding and/or decoding of the picture, the image or the video.

### Summary

The present disclosure provides a method a method of processing one or more blocks of a picture, the method comprising:

predicting one or more chroma samples of a block of the picture using one or more luma samples of the block and one or more cross-component processes, wherein one or more or all of the luma samples are clipped prior to being used in the one or more cross-component processes.

Optionally, the cross-component process receives the luma samples from a preceding process, and wherein the preceding process provides

- clipped luma samples, or
- non-clipped luma samples, the non-clipped luma samples being clipped at an input of the cross-component process.

Optionally, the luma samples are clipped before being input into the cross-component process in case

- an additional processing, e.g., one or more of a filtering, resampling or down-sampling of the luma samples, is applied to the luma samples before being input into the cross-component process, and/or
- the luma samples have not been subjected to a clipping when reconstructing the luma samples of the block.

Optionally, the one or more cross-component processes comprise:

- one or more cross-component predictions, preferably one or more of the following:

    ◦ one or more cross-component linear models (CCLM),
    ◦ one or more intra convolutional cross-component models (intra-CCCM),
    ◦ one or more inter convolutional cross-component models (inter-CCCM), and/or

- one or more cross-component loop filters, preferably one or more of the following:

    ◦ one or more cross-component sample adaptive offset (CCSAO) filters,
    ◦ one or more cross-component adaptive loop filters (CCALF),
    ◦ one or more adaptive loop filters with a convolutional cross-component model (ALF-CCCM).

Optionally, the luma samples are adaptively clipped prior to being used in the one or more cross-component processes.

Optionally, the method comprises:

determining the clipped luma samples by clipping luma samples of the block, preferably by clipping for each of the one or more chroma samples reconstructed luma samples of the block.

Optionally, determining the clipped luma samples further comprises:

- determining that a clipping of the luma samples prior to being used in the one or more cross-component processes is activated,
- determining a clipping range, and
- clipping the luma samples using the clipping range.

Optionally, the clipping range comprises a pre-defined or signaled minimum value and a pre-defined or signaled maximum value, and wherein

- a value of a luma sample is set to the minimum value, when the luma sample is below the minimum value,
- a value of a luma sample is maintained, when the luma sample is at or above the minimum value or at or below maximum value, and
- a value of a luma sample is set to the maximum value, when the luma sample is above the maximum value.

Optionally, the clipping range is

- provided for each picture separately, e.g., by signaling the clipping range in a data stream including data representing the picture, or
- constant for a plurality of pictures or for an entire video.

Optionally, the clipping range is an adaptive clipping range being content dependent, e.g., being derived from the content of the picture or the video to be coded.

Optionally, the clipping of the luma samples prior to being used in the one or more cross-component processes is enabled through a signaling, e.g., in a data stream including data representing the picture.

Optionally, an activation of the clipping of the luma samples is indicated in a data stream including data representing the picture, e.g., by signaling a flag in a bitstream, and wherein the clipping of the luma samples is activated

- at a block or coding unit (CU) level for the one or more cross-component predictions, and/or
- at coding tree unit (CTU) level for the one or more cross-component loop filters.

The present disclosure provides a non-transitory computer-readable storage medium comprising instructions which, when executed by a computer, cause the computer to carry out the method of any one of the preceding claims.

The present disclosure provides an apparatus of processing one or more blocks of a picture, the apparatus comprising:

a processing module, wherein the processing module is configured to predict one or more chroma samples of a block of the picture using one or more luma samples of the block and one or more cross-component processes, wherein one or more or all of the luma samples are clipped prior to being used in the one or more cross-component processes.

The present disclosure provides a data stream having encoded thereinto a picture, wherein the data stream comprises:

a signaling enabling and/or activating, for a prediction of one or more chroma samples of a block of the picture, a clipping of one or more or all of the luma samples prior to being used in one or more cross-component processes.

A state-of-the-art process, for processing a picture, an image or a video, e.g., when encoding and/or decoding of the picture, the image or the video, may apply an adaptive clipping operation on reconstructed luma samples. Although such clipping operations may enhance the coding performance at a block-level and picture-level, they may be sub-optimal when applied at lower levels, e.g., to certain cross-component methods such as a cross-component linear model prediction (CCLM), a convolutional cross-component model (CCCM), a cross-component sample adaptive offset (CCSAO), a cross-component adaptive loop filter (CCALF), or an adaptive loop filter CCCM (ALF-CCCM).

Embodiments of the present disclosure address the above shortcomings in the prior art by conditionally applying the adaptive clipping method at lower levels of a reconstruction process.

The present disclosure is advantageous because conditionally applying the adaptive clipping method in accordance with the teachings disclosed herein avoids or reduces the generation of luma samples exceeding a valid range, thereby avoiding the sub-optimality encountered in prior art approaches and improving the performance the processing a picture, an image or a video, e.g., when encoding and/or decoding of the picture, the image or the video.

It is to be understood that the content described in this section is not intended to identify key or critical features of the embodiment of the present disclosure, nor is it intended to limit the scope of the present disclosure. Other features of the present disclosure become readily apparent from the following description.

**Brief Description of the Drawings**

The drawings are explanatory and serve to explain the present disclosure, and are not to be construed to limit the present disclosure to the illustrated embodiments.

Fig. 1     is a block diagram of a conventional video encoder,

Fig. 2     is a block diagram of a conventional video decoder,

Fig. 3     illustrates an example of a location of left and above samples of a current block processed according to a cross-component linear model prediction (CCLM) mode for a chroma prediction;

Fig. 4     illustrates a spatial part of a convolutional filter used for a chroma prediction;

Fig. 5     illustrates a decoder side of an inter convolutional cross-component model (InterCCCM) to predict chroma samples;

Fig. 6     illustrates luma samples in relation to a chroma sample used in a filter of the InterCCCM;

Fig. 7     illustrates a diagram of a decoding using a modified sample adaptive offset (SAO) process when cross-component sample adaptive offset (CCSAO) is applied to predict chroma samples;

Fig. 8     illustrates candidate positions used for a CCSAO classifier,

Fig. 9     illustrates a joint clipping after adding SAO/BIF/CCSAO offsets to an input sample,

Fig. 10    illustrates, from left to right, four 1-D directional patterns for a CCSAO EO sample classification,

Fig. 11    illustrates a cross-component adaptive loop filter (CCALF) shape used for a chroma prediction;

Fig. 12    illustrates adding chroma SAO output samples as additional inputs to the CCALF,

Fig. 13    illustrates a decoder-side diagram of ALF-CCCM,

Fig. 14    illustrates a table listing eight cross-component models of ALF-CCCM,

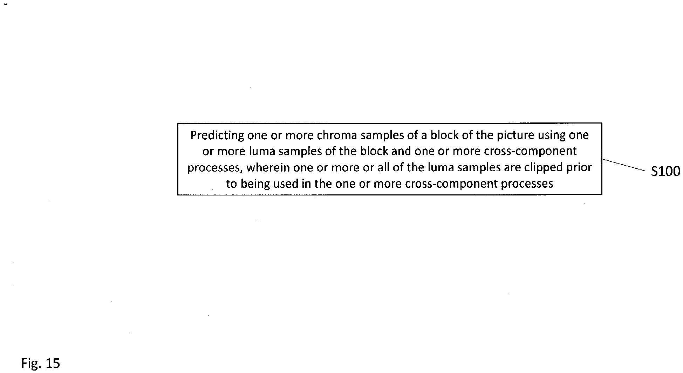

Fig. 15    illustrates a flow diagram of a method of processing one or more blocks of a picture in accordance with embodiments of the present disclosure,

Fig. 16    illustrates a block diagram of a method applying an adaptive clipping in a cross-component prediction in accordance with an embodiment of the present disclosure,

Fig. 17    illustrates a clipped version of the down-sampled luma data used in CCCM,

Fig. 18    illustrates an existing in-loop filtering process in the presence of SAO, ALF, CCSAO, CCAFL and ALF-CCCM,

Fig, 19    illustrates a processing using loop filters and adaptive clipping operations in accordance with an embodiment of the present disclosure,

Fig, 20    illustrates a processing using loop filters and adaptive clipping operations in accordance with a further embodiment of the present disclosure,

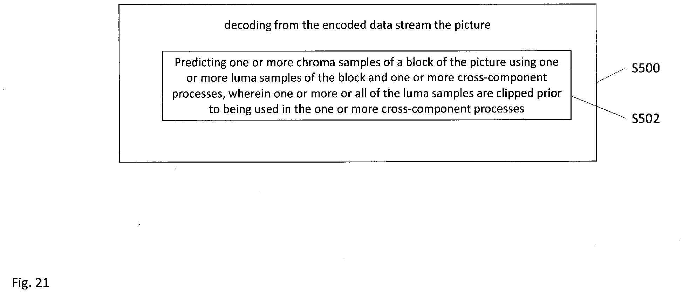

Fig. 21    illustrates a flow diagram of a method for decoding an encoded data stream in accordance with embodiments of the present disclosure,

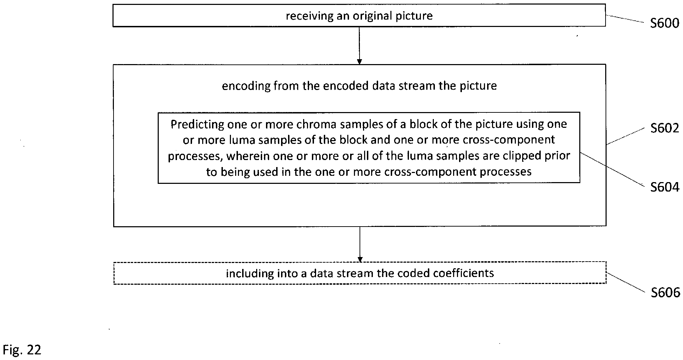

Fig. 22    illustrates a flow diagram of a method for encoding a picture into an encoded data stream in accordance with embodiments of the present disclosure,

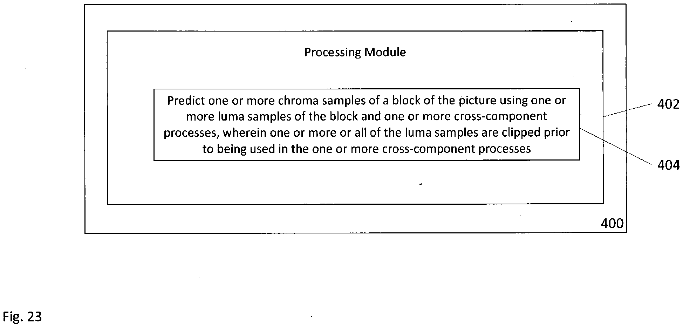

Fig. 23    illustrates a block diagram of an apparatus of processing one or more blocks of a picture in accordance with embodiments of the present disclosure,

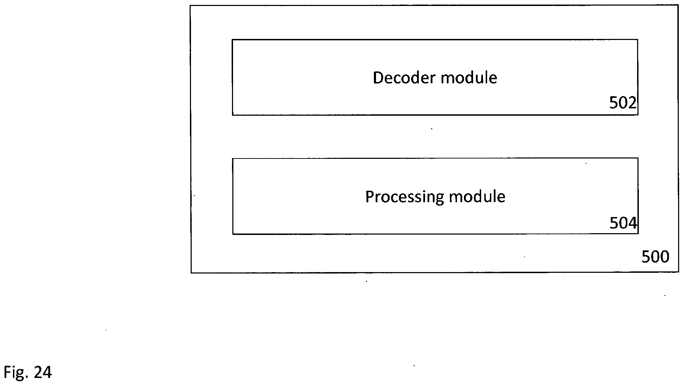

Fig. 24    illustrates a block diagram of a decoder for decoding an encoded data stream in accordance with embodiments of the present disclosure,

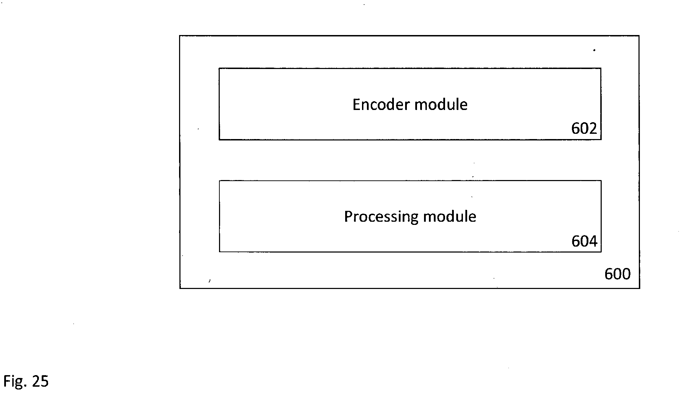

Fig. 25    illustrates a block diagram of an encoder for encoding a picture into an encoded data stream in accordance with embodiments of the present disclosure,

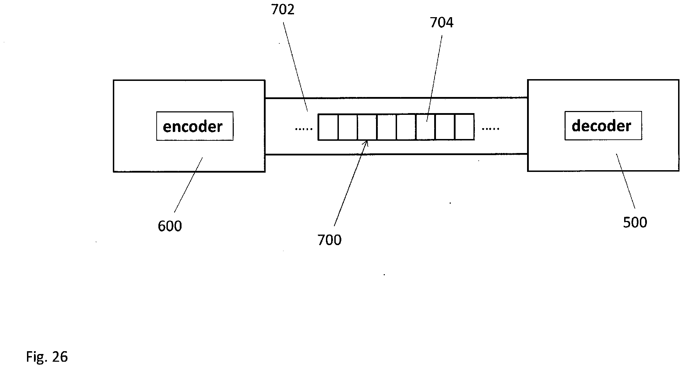

Fig. 26    illustrates a data stream in accordance with embodiments of the present disclosure, and

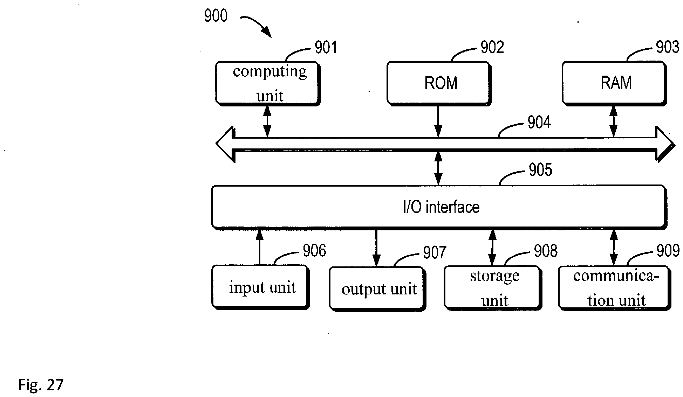

Fig. 27    illustrates a block diagram illustrating an electronic device according to embodiments of the present disclosure.

**Detailed Description**

Illustrative embodiments of the present disclosure are described below with reference to the drawings, where various details of the embodiments of the present disclosure are included to facilitate understanding and are to be considered as illustrative only. Accordingly, those of ordinary skill in the art recognize that various changes and modifications of the embodiments described herein can be made without departing from the scope of the present disclosure. Also, descriptions of well-known functions and constructions are omitted from the following description for clarity and conciseness.

In the present disclosure, the term "and/or" is intended to cover all possible combinations and sub-combinations of the listed elements, including any one of the listed elements alone, any sub-combination, or all of the elements, and without necessarily excluding additional elements.

In the present disclosure, the phrase "at least one of...or..." is intended to cover any one or more of the listed elements, including any one of the listed elements alone, any sub-combination, or all of the elements, without necessarily excluding any additional elements, and without necessarily requiring all of the elements.

In the present disclosure, the term "coding" refers to "encoding" or to "decoding" as becomes apparent from the context of the described embodiments. Likewise, the term "coder" refers to "an encoder" or to "a decoder".

In the present disclosure, the terms "if", "when", "in case", "responsive to" may be used interchangeably.

*Standard Video Coder*

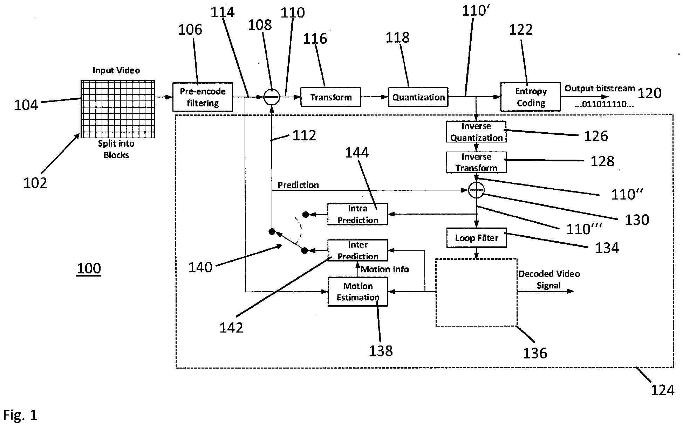

A block diagram of a standard video compression system 100 operating in accordance with the VVC standard is illustrated in Fig. 1. The standard video coder 100 compresses and encodes a picture 102 of a video sequence. The picture 102 to be encoded is partitioned into blocks 104 also referred to as coding units, CUs. The encoder 100 comprises a pre-encode filter 106 and a prediction residual signal former 108 which generates a prediction residual signal 110 so as to measure a deviation of a prediction signal 112 from the signal 114 output by the filter 106. The encoder further comprises a transformer 116, a quantizer 118 and provides an output bitstream or data stream 120 using an entropy coder 122. Further, the encoder 100 comprises a prediction stage 124 for determining the prediction signal 112, which includes a de-quantizer or inverse quantizer 126, an inverse transformer 128, a combiner 130, an in-loop filter 134, a picture buffer 136, a motion estimator 138, an intra/inter mode selector 140, an inter predictor 142 and an intra predictor 144.

The video coder 100 as described with reference to Fig. 1 compresses and encodes a picture 102 of a video sequence as follows. The picture 102 to be encoded is partitioned into the blocks or CUs 104. Each coding unit 104 is encoded using either an intra or inter coding mode. When a CU is encoded in the intra mode, intra prediction is performed by the intra predictor 144. The intra prediction comprises predicting the current CU 114 being encoded by means of already coded, decoded and reconstructed picture samples located around the current CU, e.g., on the top and on the left of the current CU. The intra prediction is performed in the spatial domain. In an inter mode, motion compensation and motion estimation are performed by the motion estimator 138 which searches, in one or more reference pictures provided by the picture buffer 136 and used to predictively code the current picture, a CU that is a good predictor of a current CU. For example, a good predictor of a current CU is a predictor which is similar to the current CU, i.e., the distortion between the two CUs is low or below a certain threshold. The motion estimation may also account for the rate cost of signaling the predictor to optimize a rate-distortion tradeoff. The output of the motion estimation step is one or more motion vectors and reference indices associated with the current CU. The motion compensation then predicts the current CU by means of the one or more motion vectors and reference pictures indices as determined by the motion estimator 138. Basically, the block or CU contained in the selected reference picture and pointed to by the determined motion vector is used as the prediction block for the current CU. The encoder 100, by means of the selector 140, selects one of the intra coding mode or the inter coding mode to use for encoding the CU and indicates the intra/inter decision, for example, by means of a prediction mode flag. Prediction residuals are calculated or determined, for example, by subtracting the predicted block from the original image block. Prediction residuals 110 are then transformed and quantized by blocks 116 and 118, and the quantized transform coefficients as well as the motion vectors and other syntax elements are entropy encoded and written into the output bitstream 120. The encoder 100 may skip the transform stage 116 and apply the quantization directly to the non-transformed residual signal 110 in a so-called transform-skip coding mode. After a block or CU has been encoded, the encoder decodes the CU and reconstructs it so as to obtain the reconstructed signal 110‴ that may serve as a reference data for predicting future CUs or blocks to encode. The quantized transform coefficients 110' are de-quantized and inverse transformed leading to a decoded prediction CU or block 110", and the decoded prediction residuals and the predicted block are then combined at 130, typically summed, so as to provide the reconstructed block or CU 110‴. The in-loop filters 134 are applied to the reconstructed picture to reduce compensation artifacts. For example, a deblocking filter, a sample adaptive offset, SAO, filter, and an adaptive loop filter, ALF, may be applied to reduce encoding artifacts. The filtered picture is stored in the buffer 136, also referred to as the decoded picture buffer, DPB, so that it may be used as a reference picture for coding subsequent pictures.

*Standard Video Decoder*

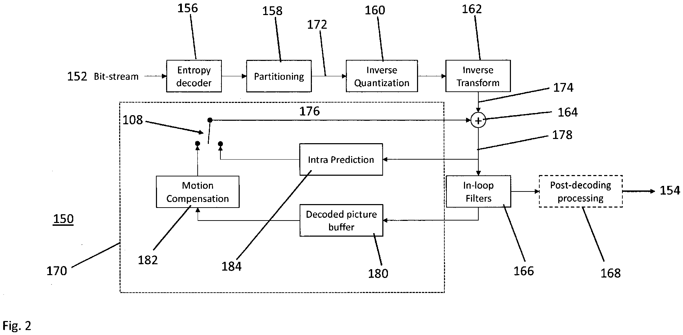

Fig. 2 is a block diagram of a video decoder 150 for predictively decoding from a data or bitstream 152 a picture or video which is provided at an output 154 of the decoder 150. The decoder 150 includes an entropy decoder 156, a partitioning block 158, an inverse quantizer 160, an inverse transformer 162, a combiner 164, an in-loop filter 166, optionally a post-decoding processor 168, and a prediction module 170. The prediction module 170 includes a decoded picture buffer 180 a motion compensator 182 an intra predictor 184.

An encoded picture of a video sequence is decompressed and decoded by the decoder 150 as follows. The input bitstream 152 is entropy decoded by the decoder 156 which provides, for example, the block partitioning information, the coding mode for each coding unit, the transform coefficients contained in each transform block, prediction information, like intra prediction mode, motion vectors, reference picture indices, and other coding information. The block partitioning information indicates how the picture is partitioned and the decoder 150 may divide the input picture into coding tree units, CTUs, typically of a size of 64x64 or 128×128 pixels and divide each CTU into rectangular or square coding units, CUs, according to the decoded partitioning information. The entropy decoded quantized coefficients 172 are de-quantized 160 and inverse transformed 162 so as to obtain the decoded residual picture or CU 174. The decoded prediction parameters are used to predict the current block or CU, i.e., whether the predicted block is to be obtained through its intra prediction or through its motion-compensated temporal prediction. The prediction process performed at the decoder side is the same as the one performed at the encoder side. The decoded residual blocks 174 are added to the predicted block 176, thereby yielding the reconstructed current image block 178. The in-loop filters 166 are applied to the reconstructed picture or image which is also stored in the decoded picture buffer 180 to serve with the reference picture for future pictures to decode. As mentioned above, the decoded picture may further go through a post-decoding processing, for example for performing an inverse color transformation, for example a conversion from YCbCr 4:2:0 to RGB 4:4:4.

In all above processes, the entropy (de)coding of syntax elements representing encoder decisions such as block partitioning information, prediction modes/parameters, quantized transform coefficients, etc. may be carried out by using a context-adaptive entropy coder, such as Context-Adaptive Binary Arithmetic Coding (CABAC). To use CABAC, each syntax element is first binarized to be represented with a series of bins. Then each bin is associated with a CABAC context model that keeps track of binary values of that particular bin in the past, in order to more efficiently model its probability distribution. *Description of tools in VVC and Enhanced Compression Model (ECM)*

In the following a brief description of ECM and VVC/VTM tools, e.g., for chroma prediction is provided, which are described in more detail in the JVET-AG2025 and JVET-T2002 documents.

## Cross-component linear model prediction (CCLM)

The cross-component linear model (CCLM) prediction mode is used in VVC in which the chroma samples are predicted based on reconstructed luma samples of the same coding unit (CU) by using a linear model as follows:

$$\text{pred}_C(i,j) = \alpha \cdot \text{rec}_L{}'(i,j) + \beta$$

where $\text{pred}_C(i,j)$ represents the predicted chroma samples in the CU and $\text{rec}_L(i,j)$ represents the downsampled reconstructed luma samples of the same CU.

The CCLM parameters $\alpha$ and $\beta$ are derived with at most four neighbouring chroma samples and their corresponding down-sampled luma samples.

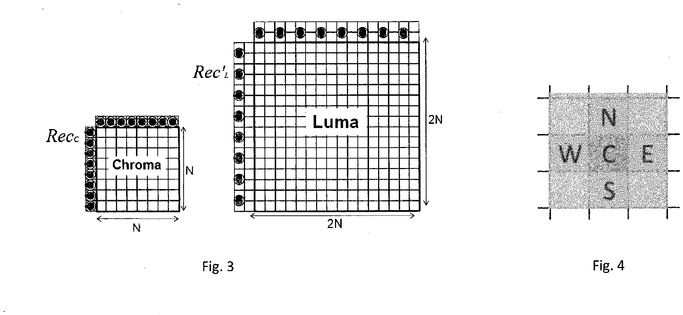

Fig. 3 illustrates an example of the location of the left and above samples of the current block processed using the CCLM mode. The left and above samples are used for the derivation of $\alpha$ and $\beta$. Fig. 3 illustrates the N× chroma block on the left and the reconstructed left/above samples $Rec_C$, and the 2N× lima block on the right and the reconstructed left/above samples $Rec'_L$.

## Multi-model linear model (MMLM) mode in ECM

The CCLM included in VVC is extended by adding three Multi-model LM (MMLM) modes (JVET-D0110). In each MMLM mode, the reconstructed neighboring samples are classified into two classes using a threshold which is the average of the luma reconstructed neighboring samples. The linear model of each class is derived using the Least-Mean-Square (LMS) method. The LMS method is used to derive a linear model for the CCLM mode, and a slope adjustment to is applied to the cross-component linear model (CCLM) and to the Multi-model LM prediction. The adjustment is tilting the linear function which maps luma values to chroma values with respect to a center point determined by the average luma value of the reference samples.

## Convolutional cross-component intra prediction model in ECM

In this method a convolutional cross-component model (CCCM) is applied to predict chroma samples from reconstructed luma samples in a similar spirit as done by the CCLM modes. As with CCLM, the reconstructed luma samples are down-sampled to match the lower resolution chroma grid when chroma sub-sampling is used. Similar to CCLM the top, left or top and left reference samples are used as templates for model derivation.

Also, similar to CCLM, there is an option of using a single model variant or a multi-model variant of CCCM. The multi-model variant uses two models, one model derived for samples above the average luma reference value and another model for the rest of the samples (following the spirit of the CCLM design). The multi-model CCCM mode can be selected for prediction units (Pus) which have at least 128 reference samples available.

Convolutional filter

A convolutional 7-tap filter may comprise a 5-tap plus sign shape spatial component, a nonlinear term and a bias term. The input to the spatial 5-tap component of the filter consists of a center (C) luma sample which is collocated with the chroma sample to be predicted and its above/north (N), below/south (S), left/west (W) and right/east (E) neighbors as is illustrated in Fig. 4 depicting the spatial part of the convolutional filter for a chroma prediction.

The nonlinear term P is represented as the power of two of the center luma sample C scaled to the sample value range of the content:

$$P = ( C*C + midVal ) >> bitDepth$$

That is, for 10-bit content it is calculated as:

$$P = ( C*C + 512 ) >> 10$$

The bias term B represents a scalar offset between the input and output (similar to the offset term in CCLM) and is set to a middle chroma value (512 for 10-bit content).

The output of the filter is calculated as a convolution between the filter coefficients $c_i$ and the input values and is clipped to the range of valid chroma samples:

$$predChromaVal = c_0C + c_1N + c_2S + c_3E + c_4W + c_5P + c_6B$$

Inter-CCCM

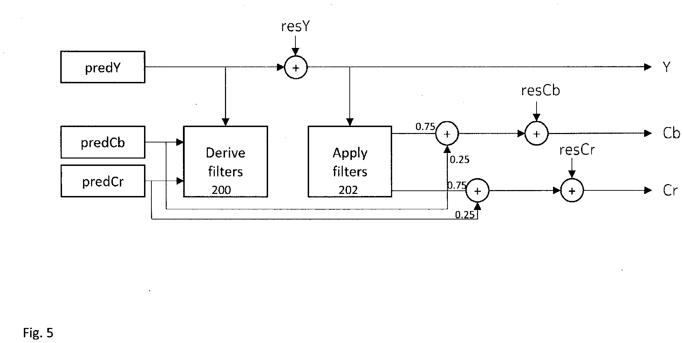

InterCCCM applies the CCCM method for predicting chroma samples from reconstructed luma samples when the CU uses inter prediction or intra block copy (IBC). Fig. 5 illustrates a decoder side of the method. The cross-component filters are derived 200 using the prediction blocks of luma and chroma predY, predCb, predCr. The derived filters are applied 202 to the reconstructed luma block predY+resY and blended with the prediction blocks of chroma predCb, predCr to produce, using the residuals resCb and resCr, the final chroma prediction blocks Cb, Cr. In the blending process the filtered reconstructed luma blocks predY use a blending weight of 0.75 and the chroma prediction blocks predCb, predCr use a blending weight of 0.25.

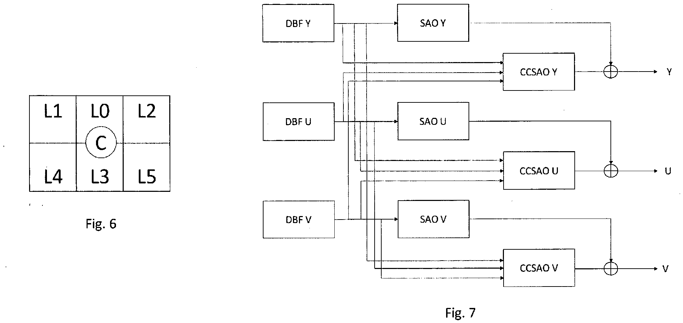

An 8-tap filter may by comprised of 6 spatial luma samples, a nonlinear term, and a bias term. The spatial luma samples (L0,...,L5) are obtained from the luma grid by selecting the 6 luma samples closest to the chroma position C without down sampling. This is illustrated in Fig. 6 depicting the luma samples L0,..,L5 in relation to the chroma sample C. The predicted chroma value is obtained as:

$$predChromaVal =$$
$$c_0 L0 + c_1L1 + c_2L2 + c_3L3 + c_4L4 + c_5L5 + c_6 \; nonlinear((L0+L3+1) >> 1) + c_7 B,$$

where *nonlinear* is the CCCM's nonlinear operator and B is the bias.

Cross-Component Sample Adaptive Offset (CCSAO)

The cross-component sample adaptive offset (CCSAO) is used to refine reconstructed chroma samples. Similarly to the sample adaptive offset (SAO), the CCSAO classifies the reconstructed samples into different categories, derives one offset for each category and adds the offset to the reconstructed samples in that category. However, different from SAO which only uses one single luma/chroma component of a current sample as input, the CCSAO utilizes all three components to classify the current sample into different categories. To facilitate the parallel processing, the output samples from the de-blocking filter are used as the input of the CCSAO. Fig. 7 illustrates a diagram of a decoding using a modified SAO process when CCSAO is applied.

In CCSAO, only the Band Offset (BO) is used to enhance the quality of the reconstructed samples. For a given luma/chroma sample, three candidate samples are selected to classify the given sample into different categories: one collocated Y sample, one collocated U sample, and one collocated V sample. The sample values of the three selected samples are then classified into three different bands {$band_Y$, $band_U$, $band_V$}, and a joint index $i$ represents the category of the given sample. One offset is signaled and added to the reconstructed samples that fall into that category, which can be formulated as

$$band_Y = (Y_{col} \cdot N_Y) \gg BD$$

$$band_U = (U_{col} \cdot N_U) \gg BD$$

$$band_V = (V_{col} \cdot N_V) \gg BD$$

$$i = band_Y \cdot (N_U \cdot N_V) + band_U \cdot N_V + band_V$$

$$C'_{rec} = Clip1(C_{rec} + \sigma_{CCSAO}[i])$$

where {$Y_{col}$, $U_{col}$, $V_{col}$} are the three selected collocated samples used to classify the current sample; {$N_Y$,$N_U$,$N_V$} are the numbers of equally divided bands applied to {$Y_{col}$, $U_{col}$, $V_{col}$} full range respectively; $BD$ is the internal coding bit-depth; $C_{rec}$ and $C'_{rec}$ are the reconstructed samples before and after the CCSAO is applied; and $\sigma_{CCSAO}[i]$ is the value of the CCSAO offset applied to $i$-th BO category.

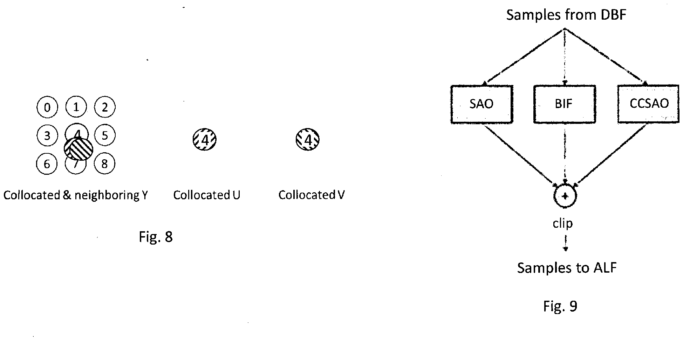

The collocated luma sample can be chosen from 9 candidate positions, while the collocated chroma sample positions are fixed, as depicted in Fig. 8 which illustrates the candidate positions used for the CCSAO classifier.

Similar to SAO, different classifiers can be applied to different local region to further enhance the whole picture quality. The parameters for each classifier (i.e., the position of $Y_{col}$, $N_Y$, $N_U$, $N_V$, and offsets) are signaled at picture level, and the classifier to be used is explicitly signaled and switched at CTB level. For each classifier, the maximum of {$N_Y$, $N_U$, $N_V$} is set to {16, 4, 4}, and the offsets are constrained to be within the range [-15, 15]. At most 4 classifiers are used per frame.

The SAO, Bilateral filter (BIF) and CCSAO offset are computed in parallel, added to the reconstructed chroma samples and jointly clipped, as shown in Fig. 9, which illustrates the joint clipping after adding the SAO/BIF/CCSAO offsets to the input sample.

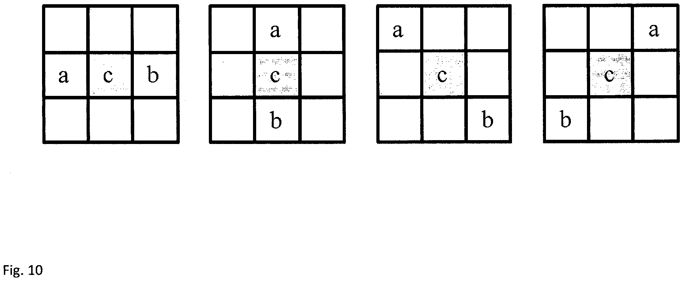

Similar to the edge classifier of SAO in VVC the edge-based classifier of CCSAO also uses four 1-D directional patterns for the sample classification: horizontal, vertical, 135° diagonal and 45° diagonal. Fig. 10 illustrates, from left to right, the four 1-D directional patterns for CCSAO EO sample classification: horizontal (EO class = 0), vertical (EO class =1), 135° diagonal and 45° diagonal.

For every 1-D pattern, each sample is classified based on the sample difference between the luma sample value labeled as "c" and its two neighbor luma samples labeled as "a" and "b" along the selected 1-D pattern.

Similar to SAO, the encoder may decide the best 1-D directional pattern using a rate-distortion optimization (RDO) and signal this additional information in each classifier/set. Both the sample differences "a-c" and "b-c" are compared against a pre-defined threshold value (Th) to derive the final "class_idx" information.

The encoder selects the best "Th" value from an array of pre-defined threshold values based on an RDO and the index into the "Th" array is signaled.

An additional difference between the CCSAO edge-based classifier and the SAO edge classifier in VVC is that, in the former, chroma samples use the co-located luma samples for deriving the edge information (samples "a", "c" and "b" are the co-located luma samples) whereas, in the latter chroma samples use their own neighboring samples for deriving the edge information.

Two edge-based classifiers are supported in ECM, and the edge-based classifier is decided by an RDO and is signaled in slice header.

The first edge-based classifier process is formulated as follows:

$$Ea = (a-c<0)? \ (a-c<(-Th)? \ 0:1) : (a-c<(Th)? \ 2:3) \qquad (1)$$

$$Eb = (b-c<0)? \ (b-c<(-Th)? \ 0:1) : (b-c<(Th)? \ 2:3) \qquad (2)$$

$$class\_idx = i_B * 16 + \text{Ea} * 4 + \text{Eb} \tag{3}$$

$$C'_{rec} = Clip1(C_{rec} + \sigma_{CCSAO}[class\_idx]) \tag{4}$$

with the variable "$i_B$" in equation (3) being derived as follows:

$$i_B = (\text{cur} \cdot N_{cur}) \gg BD \ (\text{or}) \ i_B = (col1 \cdot N_{col1}) \gg BD \ (\text{or}) \ i_B = (col2 \cdot N_{col2}) \gg BD, \tag{5}$$

wherein, "cur" is the current sample being processed, *col*1 *and col*2 are the co-located samples. When luma samples are processed, *col*1 *and col*2 are the co-located $C_b$ and $C_r$ samples, respectively. When chroma ($C_b$) samples are processed, *col*1 *and col*2 are the co-located $Y$ and $C_r$ samples, respectively. Similarly, when chroma ($C_r$) samples are processed, *col*1 *and col*2 are the co-located $Y$ and $C_b$ samples, respectively.

Based on an RDO, the encoder signals one among the samples "cur", "*col*1", "*col*2" used in deriving the band information.

The second edge-based classifier is a subset of the first edge-based classifier with less edge range divisions, and is formulated as follows:

$$\text{Ea=(a-c<(-Th)? 0:1)} \tag{6}$$

$$\text{Eb= (b-c<(-Th)? 0:1)} \tag{7}$$

$$class\_idx = i_B * 4 + \text{Ea} * 2 + \text{Eb} \tag{8}$$

$$C'_{rec} = Clip1(C_{rec} + \sigma_{CCSAO}[class\_idx]) \tag{9}$$

To reduce the signaling overhead, the CCSAO offsets and classifier parameters can be inherited from previous coded pictures. A FIFO buffer is used to store the CCSAO parameters. An index is signaled in the slice header to indicate which candidate in the FIFO buffer is selected for the current slice.

Cross-component adaptive loop filter (CCALF) with long tap filter

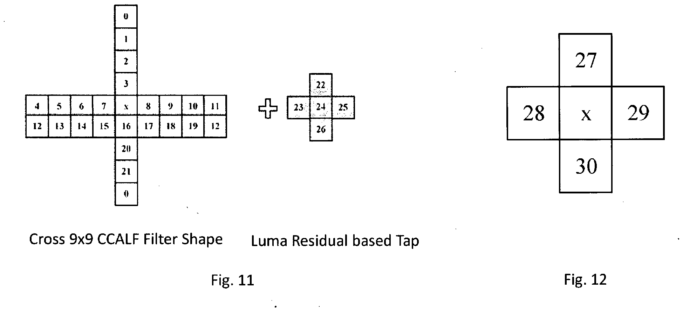

Different from VVC wherein only luma samples are involved in CCALF, in ECM, the CCALF process uses a linear filter to filter luma sample values, luma residual samples and to generate a residual correction for the chroma samples. In addition, the CCALF filter shape is constructed by 23 luma spatial taps and 5 luma residual taps, as is illustrated in Fig. 11 showing a 25-tap long filter. For a given slice, the encoder can collect the statistics of the slice, analyze them and can signal up to 16 filters through an adaptation parameter set (APS). The number of bits used to represent the fractional part of a CCALF coefficient can vary from 7 to 10 adaptively. In an ALF adaptation parameter set (APS), a 2-bit syntax element is signalled for each chroma component to indicate the number of bits used for the CCALF coefficients for this component. In addition, the power of 2 constraint is removed. The chroma SAO output samples applied to 4 taps in a 3x3 asymmetric cross shape are added as additional inputs to the CCALF, as illustrated in Fig. 12.

ALF-CCCM

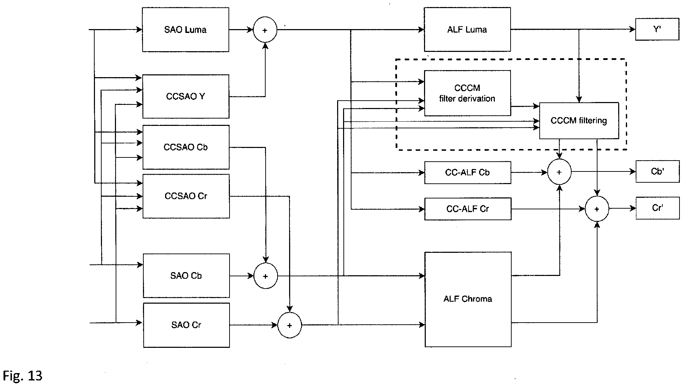

The adaptive loop filter with convolutional cross-component model (ALF-CCCM), as proposed in JVET-AK0088, aims to improve the quality of the reconstructed chroma samples. Fig. 13 illustrates a decoder-side diagram of ALF-CCCM.

In the ALF-CCCM filtering scheme, each CTU is divided into non-overlapping blocks and for each block the cross-component filter coefficients are derived using the SAO outputs. The output samples of luma ALF are used as input to the CCCM filtering (see the dashed rectangle in Fig. 13). To obtain a correction signal the SAO chroma samples are subtracted from the CCCM output samples. The correction is weighted by 0.5 and added to the ALF chroma output to improve chroma reconstruction samples (i.e., the reconstruction becomes *chromaRec = alfChroma + ccAlf + 0.5*cccmCorrection*).

The encoder decides the best block size for each CTU using a rate-distortion optimization (RDO) loop. There are eight possible blocks sizes 4x4, 8x2, 2x8, 8x8, 16x16, 32x32, 64x64, 128x128. For a filter derivation the blocks are extended by one sample on each side. The extension is clipped against CTU boundaries.

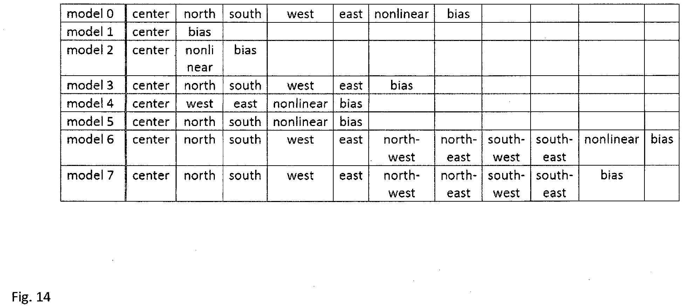

For each CTU, the encoder's RDO decides the best cross-component model from eight possible models. The list of all models can be found the Table in Fig. 14, where the cardinal directions indicate co-located luma sample position in the chroma grid (north up, south down). The nonlinear and bias terms are the same as in the 7-tap CCCM model. The CCCM solver is used for deriving the filter coefficients. The 6-tap down sampling filter (used in CCCM and CCLM) is used for mapping the co-located luma into the chroma grid.

For each CTU, the choice of the block size and the choice of the cross-component model are signaled using CABAC coded flags. The method and the signaling are skipped for CTUs where luma ALF is not applied.

For intra-coding, a CTU may inherit both the block size and the model type from the above or left CTU. This choice is signaled using a single CABAC coded flag for each CTU when ALF-CCCM is present in the left and/or above CTU. If two CTU candidates are available, another CABAC coded flag is signaled to indicate the choice.

For inter-coding, a picture may inherit the block sizes and model types for all CTUs from a reference picture. The reference picture is derived from the L0 and L1 lists. Only reference pictures with ALF-CCCM present in at least one CTU are considered. The reference picture with the smallest POC distance to the current POC is selected. If activated, the picture level inheritance will skip the CTU-level signaling completely for the current picture. This choice is signaled using a single CABAC coded flag if a reference picture with at least one CTU utilizing ALF-CCCM is present.

*Adaptive clipping in ECM*

A bit-depth based clipping defined as [0, 2"bitdepth - 1] is applied in filtering, sampling, interpolation, weighted prediction, weighted combination, reconstruction, and other stages, to ensure that the generated prediction and reconstruction samples remain in the defined dynamic range.

In an adaptive clipping method, the range [min, max] of the clipping is signalled as delta values in a picture header. For I pictures, the min/max is signalled as delta values compared to [64, 940], for other pictures, the delta values compared to the min/max values of the collocated picture are signalled.

When clipping is performed in the luma mapping with chroma scaling (LMCS) domain, the min/max values are derived by applying a forward LMCS look-up table to the signalled min/max values.

At the encoder, the min/max values are obtained by scanning the sample values in the original picture. If a motion compensated temporal filter (MCTF) is applied to a picture, the min/max values are obtained by scanning the sample values in the MCTF prefiltered picture.

The min/max values are used as the lower and upper bounds for clipping at the block or CU reconstruction stage (when adding the residual signal to the prediction) and before saving the reconstructed picture (i.e., after all loop filters executed) into the decoded picture buffer. The min/max values are derived from the MCTF prefiltered picture.

*Adaptive clipping of samples in cross-component methods*

In the current design of ECM , the above described adaptive clipping operation applies a clipping operation on reconstructed luma samples in two phases:

- A first clipping operation is applied at block level or CU-level after the reconstruction of the block. The first clipping may be applied or happen before the loop filters, e.g., in a encoder before block 134 in Fig. 1 or in a decoder before block 166 in Fig. 2.
- A second clipping operation is applied after picture or frame reconstruction. In this case, all the loop filtering operations, such as SAO and ALF, are applied prior to the second adaptive clipping operation. After the second clipping operation stage, the picture is stored in decoded picture buffer and/or is an output picture for display. The second clipping may happen after the last loop filter and before the picture is stored in a decoded picture buffer or is outputted for display, e.g., the second clipping may be applied on the picture or frame to be stored in or provided by the buffer 136 of the encoder of Fig. 1 or the buffer 180 of the decoder of Fig. 2. In a decoder, the second clipping may also be applied on the picture or frame to be output by the decoder, e.g., in the post-decoding block 168 of the decoder of Fig. 2.

Although these two adaptive clipping operations enhance the coding performance at the block-level and picture-level, they have some sub-optimality when applied to cross-component methods such as CCLM, CCCM, CCSAO, CCALF, and ALF-CCCM which have been described above. More specifically,

- In cross-component prediction methods, like CCLM and CCCM, only the initial clipping operation is applied to the luma samples at block or CU levels. Additionally, cross-component prediction employs down-sampled luma pixels during its prediction process when operating in non-4:4:4 color sampling. Consequently, the down-sampling process may cause luma samples used for cross-component prediction to exceed their valid range.

- In cross-component filters, such as CCALF, CCSAO, ALF-CCCM, the luma samples that are used for chroma filtering may go out-of-range, e.g., because of following reasons:

  ◦ The previous filtering stages may cause the luma samples to exceed their range. For instance, CCALF and ALF-CCCM employ luma samples after SAO for the chroma filtering process, as depicted in Fig. 13. If the SAO filtering results in luma samples exceeding their range, the chroma filtering may lead to a sub-optimal performance.
  ◦ The down-sampling of luma samples can potentially cause them to exceed their valid range. For instance, in the ALF-CCCM algorithm, post-SAO luma samples are down-sampled for filtering purposes, as illustrated in Fig. 13. This down-sampling operation may lead to luma samples exceeding their range, resulting in sub-optimal chroma filtering.

Stated differently, a state-of-the-art process for predicting chroma samples using cross-component (CC) processes and luma samples may operate on clipped or non-clipped luma samples (the clipped luma samples being clipped at the CU level - the above mentioned first clipping operation) which are to be input into the one or more CC processes. As explained above, the conventional process may yield sub-optimal chroma prediction results because an additional processing of the luma filters (clipped or non-clipped) may yield luma samples exceeding a predefined range.

Embodiments of the present disclosure address the above shortcomings in the prior art by conditionally applying the adaptive clipping method on the input of one or more of the cross-component prediction (such as CCLM and CCCM) and cross-component loop-filters (such as CCSAO, CCALF and ALF-CCCM). In accordance with embodiments, the conditional filtering may be applied only to intermediate samples used as input to the filter derivation module of cross-component tools. In accordance with other embodiments, the actual luma samples may also be clipped using the adaptive clipping methods. Stated differently, to address the shortcomings in the prior art, the present disclosure provides an approach which, other than the prior art approaches, provides for an additional clipping of the luma samples before they are input into the cross-component processes, thereby avoiding out-of-range luma samples and any associated degradation of the chroma prediction.

The present disclosure is advantageous because conditionally applying the adaptive clipping method in accordance with the teachings disclosed herein avoids or reduces the generation of luma samples exceeding a valid range, thereby avoiding the sub-optimality encountered in prior art approaches and improving the performance the processing a picture, an image or a video, e.g., when encoding and/or decoding of the picture, the image or the video.

Fig. 5 illustrates a flow diagram of an embodiment of a method of processing one or more blocks of a picture. The method includes:

S100: Predicting one or more chroma samples of a block of the picture using one or more luma samples of the block and one or more cross-component processes, wherein one or more or all of the luma samples are clipped prior to being used in the one or more cross-component processes.

In accordance with embodiments, the luma samples are clipped for each of the one or more chroma samples prior to being used in the one or more cross-component processes, i.e., the luma samples are clipped for each of the chroma samples to be predicted, and the inventive clipping is below CU level.

In accordance with embodiments, the one or more luma samples are reconstructed and clipped luma samples of the block, i.e., before the chroma prediction the luma samples of the block are reconstructed and clipped at CU or block level, and the inventive clipping is performed in addition and below CU level. The reconstructed and clipped luma samples may be obtained by reconstructing the luma samples for the block and applying clipping, i.e., this clipping is at the CU level and the inventive clipping is in addition to this existing clipping process. It is noted that the "reconstructed luma samples" may not be the final luma values that are used as output luma samples or that are used in the decoded picture buffer. They may be subjected to additional processing later on, e.g., they one or more of loop filters may be applied.

Thus, other than state-of-the art processes, which apply clipping to luma samples on the CU/block level and/or the picture/frame level, the inventive clipping is below the CU level, namely at a sample/pixel level and not at a CU or picture level. Stated differently, the inventive clipping of the luma samples, other than the above mentioned conventional first clipping operation, is not applied at block level or CU-level after the reconstruction of the block. Also, the inventive clipping of the luma samples, other than the above mentioned conventional second clipping operation, is not applied after picture or frame reconstruction.

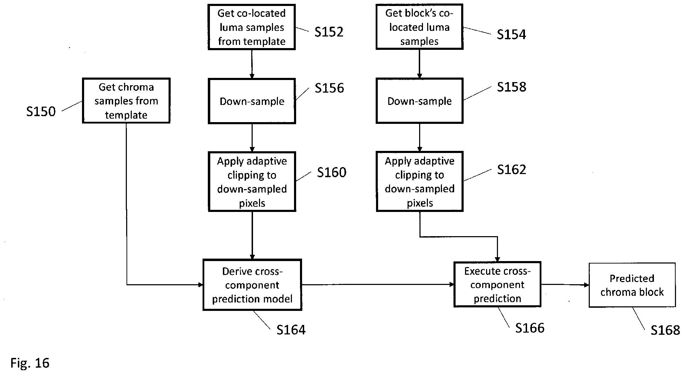

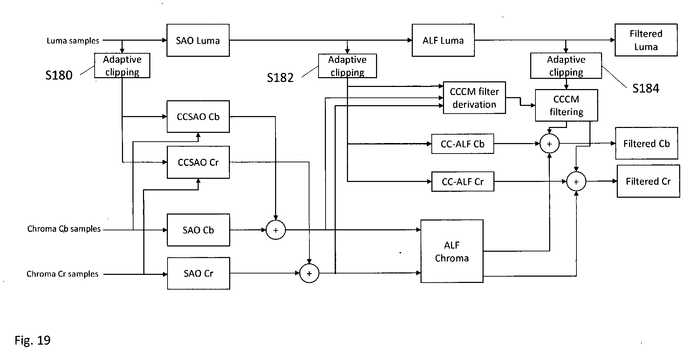

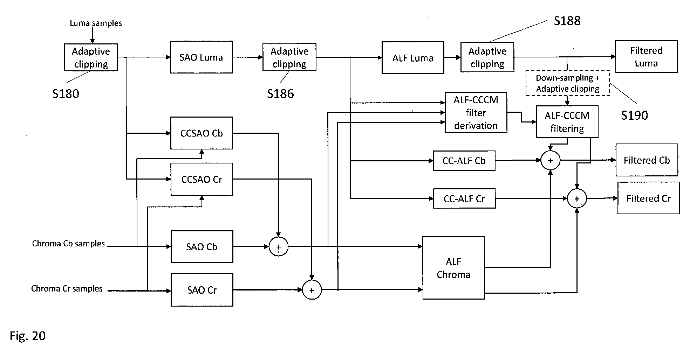

In accordance with embodiments, the luma samples are clipped before being input into the cross-component process only in case an additional processing is applied to the luma samples before being input into the cross-component process. In accordance with embodiments, the inventive clipping may be applied only if the luma samples have been subjected to a filtering (see Fig. 19 and Fig. 20 below) and/or to a resampling or down-sampling (see Fig. 16 and Fig. 20 below).

In accordance with embodiments of the present disclosure, some or all of the luma samples may be adaptively clipped prior to using them in one or more of cross-component methods. The "adaptive clipping" of the luma samples in accordance with embodiments of the present disclosure may be performed in a way as described above with reference to the adaptive clipping in ECM, i.e., "adaptive" refers to the fact that the min/max values used for the clipping are content-dependent and these values are derived for each content (in frame level or sequence-level) and signaled in the bitstream, e.g., to the decoder.

In accordance with embodiments of the present disclosure, a clipping range is content dependent and derived from an underlying content and signaled, e.g. to a decoder. The clipping range may be signaled for each frame separately or it may be constant for the entire video.

In accordance with embodiments of the present disclosure, the cross-component method comprises:

- one or more cross-component predictions, and/or
- one or more cross-component loop filters.

In accordance with embodiments of the present disclosure, the one or more cross-component predictions comprise at least one the following:

- a cross-component linear model (CCLM),
- an intra convolutional cross-component model (intra-CCCM),
- an inter convolutional cross-component model (inter-CCCM),
- any cross-component prediction method.

In accordance with embodiments of the present disclosure, the one or more cross-component loop filters comprise at least one the following:

- a cross-component sample adaptive offset (SAO),
- a cross-component adaptive loop filter (ALF),
- a ALF-CCCM,
- any cross-component loop filter.

In accordance with embodiments of the present disclosure, the adaptive clipping may be applied to one or more intermediate luma samples which are used as an input to a cross-component sample adaptive offset (CCSAO) filter.

In accordance with embodiments of the present disclosure, the adaptive clipping may be applied to one or more intermediate luma samples used as input to a cross-component adaptive loop filter (CCALF).

In accordance with embodiments of the present disclosure, the adaptive clipping may be applied to one or more intermediate luma samples used as an input to a ALF-CCCM filter.

In accordance with embodiments of the present disclosure, the adaptive clipping may be applied to one or more intermediate luma samples used as an input to one or more cross-component prediction methods.

In accordance with embodiments of the present disclosure, the adaptive clipping may be applied to one or more intermediate luma samples used as an input to the one or more cross-component prediction methods, in case the intermediate luma samples have undergone an additional processing, such as a resampling process.

In accordance with embodiments of the present disclosure, the adaptive clipping may be applied to one or more intermediate luma samples used as an input to one or more ALF-CCCM methods, in case the intermediate luma samples have undergone an additional processing, such as a resampling process.

In accordance with embodiments of the present disclosure, the adaptive clipping may be applied to one or more intermediate luma samples used as an input to one or more cross-component prediction tools, in case the luma samples have not been adaptively clipped prior to their usage in the one or more cross-component predictions.

In accordance with embodiments of the present disclosure, the adaptive clipping may be applied to one or more intermediate luma samples used as an input to one or more cross-component loop filters, in case the luma samples have not been adaptively clipped prior to their usage in the one or more cross-component predictions.

In accordance with embodiments of the present disclosure, the adaptive clipping may be applied to one or more intermediate luma samples used as an input to the one mor more cross-component loop filters, in case the luma samples have undergone only a CU-level adaptive clipping process.

In accordance with embodiments of the present disclosure, the inventive approach disclosed herein may be enabled through a high-level syntax (HLS) element flag, such as a Sequence Parameter Set (SPS) or Picture Parameter Set (PPS) flag. Multiple HLS-level syntax elements may be provided for enabling the inventive adaptive clipping in different coding tools.

In accordance with embodiments of the present disclosure, an activation of the inventive adaptive clipping may be determined by a flag signaled in a data stream, like a bitstream, for an operating granularity of the method. For example, a CTU-level flag may be used for the one or more loop filters as they operate in CTU-level granularity, and a CU-level flag may be used for a cross-component prediction.

Embodiments of the present disclosure are now described.

*Clipping operation*

In accordance with embodiments, the luma samples are adaptively clipped prior to being used in the one or more cross-component processes. As mentioned above, the term adaptive in adaptive clipping refers to a content-dependency of the clipping range. In accordance with embodiments, the min/max values of the clipping range may be derived in the encoder side from an uncompressed picture/video and signaled to the decoder.

In this disclosure, the term "*out-of-range*" is used in the context of adaptive clipping range as described above. More specifically, a clipping operation clips samples based on a pre-defined or signaled minimum and maximum values for that range. The range of samples may be defined as *Range = [$R_{min}$, $R_{max}$]* and a reconstructed sample may be defined as S. Then the clipping operation may be applied according to the following pseudo code:

*S' = Clip(S, Range)*

where *S'* is the clipped version of S and is obtained as follows:

$$if\ (S < R_{min})$$
$$\{$$
$$\qquad S' = R_{min};$$
$$\}$$
$$else\ if\ (S > R_{max})$$
$$\{$$
$$\qquad S' = R_{max};$$
$$\}$$
$$else$$
$$\{$$
$$\qquad S' = S;$$
$$\}$$

In accordance with embodiments, the clipping range is provided for each picture separately, e.g., by signaling the clipping range in a data stream including data representing the picture, or the clipping range is constant for a plurality of pictures or for an entire video. As mentioned above, in accordance with further embodiments, the clipping range is an adaptive clipping range being content dependent, e.g., it may be derived from the content of the picture or the video to be coded. For example, an uncompressed picture in the encoder side is processed pixel-by-pixel and the minimum and maximum values of the luma samples are determined. This range is then signaled in the bitstream to the decoder and used for clipping the reconstructed/decoded luma samples in the different stages.

*Clipping for cross-component prediction*

Cross-component prediction tools, like CCLM and CCCM, may use down-sampled luma data from the co-located luma region to determine the model parameters and predict chroma samples. However, this down-sampling process may lead to the down-sampled data exceeding the valid signaled range, e.g., some samples may go out-of-range, resulting in suboptimal chroma prediction.

In accordance with embodiments, the adaptive clipping operation is applied on the down-sampled luma data before using them in a cross-component prediction process. Fig. 16 illustrates a block diagram of a method applying an adaptive clipping in a cross-component prediction in accordance with an embodiment. As is illustrated, chroma samples are obtained S150 from a template area of the currently processed block, co-located luma samples are obtained S152 from the template and co-located luma samples of the currently processed block are obtained S154. The co-located luma samples from the template and the co-located luma samples of the currently processed block are down-sampled S156, S158, and adaptively clipped S160, S162. The clipped down-sampled co-located luma samples from the template are used for deriving S164 a cross-component prediction model which is executed at S166 with the clipped down-sampled co-located luma samples of the currently processed block as an input so as to obtain S168 a predicted chroma block.

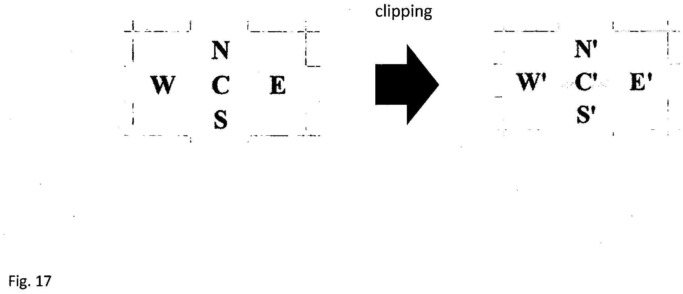

The cross-component prediction model derived at S164 may be the CCCM prediction with uses the plus-shaped down-sampled luma information for the chroma prediction. In accordance with embodiments, the adaptive clipping operation is applied S162 on the down-sampled luma samples before using them in the CCCM prediction S166. Fig. 17 illustrates the clipped version of the down-sampled luma data in CCCM. As is shown, the down-sampled luma samples C, N, S, N, E have undergone a clipping process which results in corresponding samples C', N', S', N', E'. Consequently, the CCCM prediction result in the following formula:

$$\mathrm{predChromaVal} = c_0C' + c_1N' + c_2S' + c_3E' + c_4W' + c_5P + c_6B$$

It is noted that, in accordance with embodiments, the inventive adaptive clipping may be applied even when there is no down-sampling operation applied to luma samples, i.e., steps S156 and S158 may be optional. In accordance with embodiments, if the luma samples undergo a specific filtering operation instead of a down-sampling, the inventive adaptive clipping may be used to prevent the filtered samples from going out-of-range.

In accordance with embodiments, the inventive adaptive clipping may be applied always to the luma samples that are used for a cross-component prediction.

In accordance with other embodiments, the inventive adaptive clipping may be applied to the luma samples that are used for a cross-component prediction under certain conditions. In accordance with embodiments, if the luma samples have undergone a down-sampling and/or any filtering before being used in the cross-component prediction process, the inventive adaptive clipping is applied. Otherwise, the usage of luma samples in the cross-component prediction is done according to methods existing in the prior art.

In accordance with yet other embodiments, a use of the inventive adaptive may be indicated by a flag in a bitstream at block-level or as part of high-level syntax (HLS) information, such as Sequence Parameter Set (SPS) level and/or Picture Parameter Set (PPS) level flags.

In accordance with yet other embodiments, whether the inventive adaptive clipping method is to be applied for a cross-component prediction may be implicitly determined, e.g., at a decoder side. In accordance with embodiments, a template of the chroma block may be predicted based on cross-component models obtained with and without the adaptive clipping method, and the method that obtains a better prediction for the template is then chosen and used for the chroma block prediction.

*Adaptive clipping for cross-component loop filters*

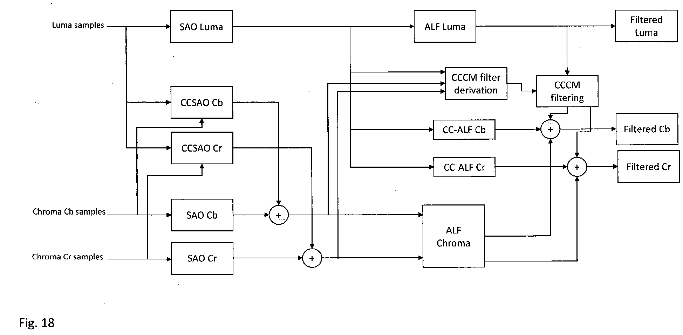

Fig. 18 illustrates an existing in-loop filtering process in the presence of SAO, ALF, CCSAO, CCAFL and ALF-CCCM in ECM. As is shown, the cross-component loop filters (CCSAO, CCALF and ALF-CCCM) use luma samples in different stages. However, when using a state-of-the-art adaptive clipping mechanism, only a CU-level adaptive clipping is done for the luma samples. As a result, the luma samples outputted from the different stages may be out-of-range, hence, not suitable for the following cross-component loop filters. Moreover, the ALF-CCCM method applies a down-sampling operation on the co-located luma samples in non-4:4:4 color sampling, and the down-sampling operation may also introduce issues as some down-sampled luma data may go out-of-range and thus result in sub-optimal ALF-CCCM filtering for chroma data.

For addressing the prior art drawbacks, in accordance with embodiments of the present disclosure, an adaptive clipping operation is applied on the luma samples after one or more of the loop filtering operations. The adaptive clipping operation may be applied to

- intermediate luma samples that are used as input to the cross-component loop filters, and/or
- reconstructed luma samples directly.

The term "intermediate luma samples" refers to the luma samples that are used as input to the filter derivation module of the cross-component filters and these intermediate luma samples may have different values than the corresponding ones in the same stage in the luma channel. For example, ALF-CCCM uses down-sampled luma as an input to the cross-component filter, and the down-sampled luma data here are considered "intermediate luma samples".

Fig, 19 illustrates a processing using loop filters and adaptive clipping operations in accordance with an embodiment. As shown, the luma samples that are used as input to the cross-component filters CCSAO Cb, CCSAO Cr have undergone the adaptive clipping operation. For example, the CCSAO uses pre-SAO luma samples (i.e., post Deblocking Filter (DBF) samples) and chroma samples as an input to the cross-component filtering. In accordance with the present disclosure, the luma samples are adaptively clipped S180. As a result, the CCSAO is able to execute the cross-component filtering operation using more reliable luma samples.

A similar mechanism is considered in CCALF and ALF-CCCM where the luma samples (post SAO/ALF luma samples) are adaptively clipped S182, S184 before using them in the cross-component filtering process (CCCM filter derivation+CCCM filtering, CC-ALF Cb, CC-ALF Cr).

In the embodiment illustrated in Fig. 19, the adaptive clipping process is applied only to the intermediate luma samples. Consequently, the values of luma samples within the luma channel remain unchanged. Further, the clipping is applied only to the luma samples input into the cross-component filtering process, and the ALF Luma receives a non-clipped output of the SAO Luma. Likewise, the Filtered Luma is the non-clipped output of the ALF Luma.

Fig, 20 illustrates a processing using loop filters and adaptive clipping operations in accordance with a further embodiment of the present disclosure. Like in Fig. 19, the luma samples that are used as input to the cross-component filters CCSAO Cb, CCSAO Cr have undergone the adaptive clipping operation S180, and the luma samples (post SAO/ALF luma samples), before using them in the cross-component filtering process (CCCM filter derivation+CCCM filtering, CC-ALF Cb, CC-ALF Cr), are adaptively clipped S186, S188. However, other than in the embodiment of Fig. 19, in this embodiment, the luma samples (post SAO/ALF luma samples) to be used in the cross-component filtering process For example, the CCSAO uses pre-SAO luma samples (i.e., post Deblocking Filter (DBF) samples) as an input to the cross-component filtering have applied the clipping not only to the luma samples, rather, as is illustrated, the adaptive clipping S186, S188, S190 is applied to the output of every filtering process SAO Luma, ALD Luma, resulting also in modifying the intermediate luma samples that are used in cross-component filters. Stated differently, the ALF Luma receives a clipped output of the SAO Luma, and the Filtered Luma is the clipped output of the ALF Luma.

Stated differently, the cross-component process receives the luma samples from a preceding process, and the luma samples may not be clipped by the preceding luma process but are clipped only when input into CC process, as illustrated in Fig. 19, or the preceding luma process already clips its output as illustrated in Fig. 20. Thus, the preceding process provides clipped luma samples, or non-clipped luma samples, the non-clipped luma samples being clipped at an input of the cross-component process. As is shown in Fig. 19 and in Fig. 20, preceding process includes one or more luma filtering processes, e.g., a sample adaptive offset (SAO) filter and/or an adaptive loop filter (ALF). In accordance with other embodiments, also other filters may be used.

Even though the embodiment of Fig. 20 modifies the intermediate luma samples for cross-component filtering, those samples may still go out of range if additional filtering or processing is applied to them so that additional clipping may be required. A down-sampling process of ALF-CCCM may cause this issue (down-sampling the clipped samples from ALF Luma causes the down-sampled values to go out of range). In accordance with embodiments, in such cases, in addition to the down sampling an additional adaptive clipping S 190 may be applied to the down-sampled intermediate luma data before using them in the chroma filtering ALF-CCCM.

It is noted that, in accordance with embodiments, the inventive approach may be applied to luma samples in only a subset of the cross-component filters. The choice of the loop filter to utilize the adaptive clipping may be indicated using a flag in the bitstream. For example, an indicator flag may be signaled in HLS (e.g., a SPS-level flag) or it may be indicated at a filtering unit level such as CTU. In accordance with other embodiments, the choice of the loop filter for which adaptive clipping is applied may be defined in the specification of the underlying codec.

In accordance with further embodiments, the inventive approach may be applied to luma samples conditionally. In accordance with embodiments, in ALF-CCCM, the adaptive clipping may be applied only if the down-sampling operation is done for the luma samples. Otherwise, the adaptive clipping operation may be skipped.

*Enabling/activation of clipping*

In accordance with embodiments, the inventive clipping of the luma samples prior to being used in the one or more cross-component processes is enabled through a signaling, e.g., in a data stream including data representing the picture. The signaling may include one or more syntax elements, e.g., one or more high-level syntax (HLS) elements, such as a Sequence Parameter Set (SPS) flag or a Picture Parameter Set (PPS) flag. In accordance with embodiments, a plurality of HLS-level syntax elements may be provided for enabling the inventive clipping of the luma samples for different coding tools.

In accordance with embodiments, an activation of the inventive clipping of the luma samples is indicated in a data stream including data representing the picture, e.g., by signaling a flag in a bitstream, and wherein the clipping of the luma samples is activated with a certain granularity. The inventive clipping may be activated

- at a block or coding unit (CU) level for the one or more cross-component predictions, and/or
- at coding tree unit (CTU) level for the one or more cross-component loop filters.

*Decoding Method*

Fig. 21 illustrates a flow diagram of a method for decoding an encoded data stream, the encoded data stream including data representing a picture. The method includes the following:

S500: Decoding from the encoded data stream the picture, wherein decoding the picture comprises predicting S502 one or more chroma samples of a block of the picture using one or more luma samples of the block and one or more cross-component processes, wherein one or more or all of the luma samples are clipped prior to being used in the one or more cross-component processes.

*Encoding Method*

Fig. 22 illustrates a flow diagram of a method for encoding a picture into an encoded data stream. The encoded data stream includes data representing the picture and the method includes the following:

S600: Receiving an original picture.

S602: Encoding the picture into the encoded data stream, wherein encoding the picture comprises predicting S604 one or more chroma samples of a block of the picture using one or more luma samples of the block and one or more cross-component processes, wherein one or more or all of the luma samples are clipped prior to being used in the one or more cross-component processes.

Optionally, the method comprises including S606 into the data stream or bitstream a signaling enabling and/or activating, for a prediction of one or more chroma samples of a block of the picture, the inventive clipping of one or more or all of the luma samples prior to being used in one or more cross-component processes.

*Further embodiments*

So far, the inventive concept has been described with reference to aspects and embodiments concerning methods of processing one or more blocks of a picture, e.g., for decoding and/or for encoding. In accordance with further embodiments, the present disclosure also provides an apparatus of processing one or more blocks of a picture as encoders/decoders including such an apparatus.

Fig. 23 illustrates a block diagram of an apparatus 400 of predicting one or more blocks of a picture in accordance with embodiments of the present disclosure. The apparatus 400 includes a processing module 402. The processing module 402 is configured to predict one or more chroma samples of a block of the picture using one or more luma samples of the block and one or more cross-component processes, wherein one or more or all of the luma samples are clipped prior to being used in the one or more cross-component processes.

Fig. 24 illustrates a block diagram of a decoder for decoding an encoded data stream in accordance with embodiments of the present disclosure. The encoded data stream includes data representing a picture. The decoder 500 includes the following modules:

502: A decoder module configured to decode from the encoded data stream the picture.

504: A processing module, e.g., a prediction module 170 as depicted in Fig. 2. The processing module 502 is configured to operate in accordance with embodiments of the present disclosure. For example, the processing module 502 includes an apparatus as described with reference to Fig. 23.

Fig. 25 illustrates a block diagram of an encoder for encoding a picture into an encoded data stream in accordance with embodiments of the present disclosure. The encoded data stream includes data representing the picture. The encoder 600 includes the following modules:

602: An encoder module configured to receive the original picture and to encode the picture into the encoded data stream.

604: A processing module, e.g., a prediction module 124 as depicted in Fig. 1. The processing module 602 is configured to operate in accordance with embodiments of the present disclosure. For example, the processing module 502 includes an apparatus as described with reference to Fig. 23.

Fig. 26 illustrates a data stream 700 in accordance with embodiments of the present disclosure, which has encoded thereinto a picture and information data associated with the picture. For example, the data stream or bitstream 700 may be provided by an encoder 600 that performs the inventive method when encoding the picture into the data stream 700. The data stream 700 is transmitted to a decoder 500 via a wired or wireless transmission medium 702, like cable or a radio link, and the decoder 500 decodes from the data stream 700 the picture. The data stream includes a signaling 704 enabling and/or activating, for a prediction of one or more chroma samples of a block of the picture, a clipping of one or more or all of the luma samples prior to being used in one or more cross-component processes.

Although some aspects of the disclosed concept have been described in the context of an apparatus, it is clear that these aspects also represent a description of the corresponding method, where a block or a device corresponds to a method step or a feature of a method step. Analogously, aspects described in the context of a method step also represent a description of a corresponding block or item or feature of a corresponding apparatus.

Fig. 27 is a block diagram illustrating an electronic device 900 according to embodiments of the present disclosure. The electronic device is intended to represent various forms of digital computers, such as a laptop, a desktop, a workstation, a personal digital assistant, a server, a blade server, a mainframe computer, and other suitable computers. The electronic device may also represent various forms of mobile devices, such as a personal digital processor, a cellular phone, a smart phone, a wearable device, and other similar computing devices. The components shown herein, their connections and relationships, and their functions are described as examples only, and are not intended to limit implementations of the present disclosure described and/or claimed herein. The device 900 includes a computing unit 901 to perform various appropriate actions and processes according to computer program instructions stored in a read only memory (ROM) 902, or loaded from a storage unit 908 into a random access memory (RAM) 903. In the RAM 903, various programs and data for the operation of the storage device 900 can also be stored. The computing unit 901, the ROM 902, and the RAM 903 are connected to each other through a bus 904. An input/output (I/O) interface 905 is also connected to the bus 904.

Components in the device 900 are connected to the I/O interface 905, including: an input unit 906, such as a keyboard, a mouse; an output unit 907, such as various types of displays, speakers; a storage unit 908, such as a disk, an optical disk; and a communication unit 909, such as network cards, modems, wireless communication transceivers, and the like. The communication unit 909 allows the device 900 to exchange information/data with other devices through a computer network such as the Internet and/or various telecommunication networks. The computing unit 901 may be formed of various general-purpose and/or special-purpose processing components with processing and computing capabilities. Some examples of the computing unit 901 include, but are not limited to, a central processing unit (CPU), graphics processing unit (GPU), various specialized artificial intelligence (AI) computing chips, various computing units that run machine learning model algorithms, digital signal processor (DSP), and any suitable processor, controller, microcontroller, etc. The computing unit 901 performs various methods and processes described above, such as an image processing method. For example, in some embodiments, the image processing method may be implemented as computer software programs that are tangibly embodied on a machine-readable medium, such as the storage unit 908. In some embodiments, part or all of the computer program may be loaded and/or installed on the device 900 via the ROM 902 and/or the communication unit 909. When a computer program is loaded into the RAM 903 and executed by the computing unit 901, one or more steps of the image processing method described above may be performed. In some embodiments, the computing unit 901 may be configured to perform the image processing method in any other suitable manner (e.g., by means of firmware).

Various implementations of the systems and techniques described herein above may be implemented in digital electronic circuitry, integrated circuit systems, field programmable gate arrays (FPGA), application specific integrated circuits (ASIC), application specific standard products (ASSP), system-on-chip (SOC), complex programmable logic device (CPLD), computer hardware, firmware, software, and/or combinations thereof. These various embodiments may include being implemented in one or more computer programs executable and/or interpretable on a programmable system including at least one programmable processor, and the programmable processor may be a special-purpose or general-purpose programmable processor, and may receive data and instructions from a storage system, at least one input device and at least one output device, and may transmit data and instructions to the storage system, the at least one input device, and the at least one output device.

Program code for implementing the methods of the present disclosure may be written in any combination of one or more programming languages. These program codes may be provided to a processor or controller of a general computer, a dedicated computer, or other programmable data processing device, such that the program codes, when executed by the processor or controller, cause the functions and/or operations specified in the flow diagrams and/or block diagrams is performed. The program code can be executed entirely on the machine, partly on the machine, as a stand-alone software package partly on a machine and partly on a remote machine or entirely on a remote machine or server.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. A machine-readable medium may include, but is not limited to, an electronic, magnetic, optical, electromagnetic, infrared, or semiconductor system, apparatus, or device, or any suitable combination of the foregoing. More specific examples of machine-readable storage media include electrical connections based on one or more wires, portable computer disks, hard disks, random access memories (RAM), read-only memories (ROM), erasable programmable read-only memories (EPROM or flash memory), fiber optics, compact disc read-only memories (CD-ROM), optical storage devices, magnetic storage devices, or any suitable combination of the foregoing.

To provide interaction with a user, the systems and techniques described herein may be implemented on a computer having a display device (e.g., a cathode ray tube (CRT) or liquid crystal display (LCD)) for displaying information for the user; and a keyboard and pointing device (e.g., a mouse or trackball) through which a user can provide an input to the computer. Other types of devices can also be used to provide interaction with the user, for example, the feedback provided to the user may be any form of sensory feedback (e.g., visual feedback, auditory feedback, or tactile feedback); and may be in any form (including acoustic input, voice input, or tactile input) to receive the input from the user.

The systems and techniques described herein may be implemented on a computing system that includes back-end components (e.g., as a data server), or a computing system that includes middleware components (e.g., an application server), or a computing system that includes front-end components (e.g., a user computer with a graphical user interface or web browser through which a user can interact with implementations of the systems and techniques described herein), or a computer system including such a backend components, middleware components, front-end components or any combination thereof. The components of the system may be interconnected by any form or medium of digital data communication (e.g., a communication network). Examples of the communication network includes: Local Area Networks (LAN), Wide Area Networks (WAN), the Internet and blockchain networks.

The computer system may include a client and a server. The Client and server are generally remote from each other and usually interact through a communication network. The relationship of the client and the server is generated by computer programs running on the respective computers and having a client-server relationship with each other. The server may be a cloud server, also known as a cloud computing server or a cloud host, which is a host product in the cloud computing service system, and solves the defects of difficult management and weak business expansion in traditional physical hosts and virtual private servers ("VPS" for short). The server may also be a server of a distributed system, or a server combined with a blockchain.

It is to be understood that the steps may be reordered, added or deleted by using the various forms of flows shown above. For example, the steps described in the present disclosure may be executed in parallel, sequentially, or in different orders, as long as the desired results of the technical solutions in the present disclosure can be achieved, and no limitation is imposed herein.

Further embodiments are now described:

A 1st embodiment provides a method of processing one or more blocks of a picture, the method comprising: predicting one or more chroma samples of a block of the picture using one or more luma samples of the block and one or more cross-component processes, wherein one or more or all of the luma samples are clipped prior to being used in the one or more cross-component processes.

A 2nd embodiment provides the method of the 1st embodiment, wherein the luma samples are clipped for each of the one or more chroma samples prior to being used in the one or more cross-component processes.

A 3rd embodiment provides the method of the 1st or 2nd embodiment, wherein the one or more luma samples are reconstructed and clipped luma samples of the block.

A 4th embodiment provides the method of the 3rd embodiment, wherein the reconstructed and clipped luma samples are obtained by reconstructing luma samples for the block and applying a clipping operation to the reconstructed luma samples.

A 5th embodiment provides the method of any one of the preceding embodiments, wherein the cross-component process receives the luma samples from a preceding process, and wherein the preceding process provides

- clipped luma samples, or
- non-clipped luma samples, the non-clipped luma samples being clipped at an input of the cross-component process.

A 6th embodiment provides the method of the 5th embodiment, wherein the preceding process includes one or more luma filtering processes, e.g., a sample adaptive offset (SAO) filter and/or an adaptive loop filter (ALF).

A 7th embodiment provides the method of any one of the preceding embodiments, wherein the luma samples are clipped before being input into the cross-component process in case an additional processing, e.g., one or more of a filtering, resampling or down-sampling of the luma samples, is applied to the luma samples before being input into the cross-component process.

An 8th embodiment provides the method of any one of the preceding embodiments, wherein the luma samples are clipped before being input into the cross-component process in case the luma samples have not been subjected to a clipping when reconstructing the luma samples.

A 9th embodiment provides the method of any one of the preceding embodiments, wherein the one or more cross-component processes comprise:

- one or more cross-component predictions, and/or
- one or more cross-component loop filters.

A 10th embodiment provides the method of the 9th embodiment, wherein the one or more cross-component predictions comprise one or more of the following:

- one or more cross-component linear models (CCLM),
- one or more intra convolutional cross-component models (intra-CCCM),
- one or more inter convolutional cross-component models (inter-CCCM).

An 11th embodiment provides the method of the 9th or 10th embodiment, wherein the one or more cross-component loop filters comprise one or more of the following:

- one or more cross-component sample adaptive offset (CCSAO) filters,
- one or more cross-component adaptive loop filters (CCALF),
- one or more adaptive loop filters with a convolutional cross-component model (ALF-CCCM).

A 12th embodiment provides the method of any one of the preceding embodiments, wherein the clipping of the luma samples prior to being used in the one or more cross-component processes is enabled through a signaling, e.g., in a data stream including data representing the picture.

A 13th embodiment provides the method of the 12th embodiment, wherein the signaling comprises one or more syntax elements, e.g., one or more high-level syntax (HLS) elements, such as a Sequence Parameter Set (SPS) flag or a Picture Parameter Set (PPS) flag.

A 14th embodiment provides the method of the 13th embodiment, wherein the signaling comprises a plurality of HLS-level syntax elements for enabling the clipping of the luma samples for different coding tools.

A 15th embodiment provides the method of any one of the preceding embodiments, wherein an activation of the clipping of the luma samples is indicated in a data stream including data representing the picture, e.g., by signaling a flag in a bitstream, and wherein the clipping of the luma samples is activated with a certain granularity.

A 16th embodiment provides the method of the 15th embodiment, wherein the clipping is activated

- at a block or coding unit (CU) level for the one or more cross-component predictions, and/or
- at coding tree unit (CTU) level for the one or more cross-component loop filters.

A 17th embodiment provides the method of any one of the preceding embodiments, wherein the luma samples are adaptively clipped prior to being used in the one or more cross-component processes.

An 18th embodiment provides the method of any one of the preceding embodiments, wherein the luma samples are clipped to be within a clipping range.

A 19th embodiment provides the method of the 18th embodiment, wherein the clipping range is

- provided for each picture separately, e.g., by signaling the clipping range in a data stream including data representing the picture, or
- constant for a plurality of pictures or for an entire video.

A 20th embodiment provides the method of the 18th or 19th embodiment, wherein the clipping range is an adaptive clipping range being content dependent, e.g., being derived from the content of the picture or the video to be coded.

A 21st embodiment provides the method of any one of the 18th to 20th embodiment, wherein the luma samples are clipped using a pre-defined or signaled minimum value and a pre-defined or signaled maximum value for the clipping range.

A 22nd embodiment provides the method of the 21st embodiment, wherein

- a value of the luma sample is set to the minimum value, when the luma sample is below the minimum value,
- a value of the luma sample is maintained, when the luma sample is at or above the minimum value or at or below maximum value, and
- a value of the luma sample is set to the maximum value, when the luma sample is above the maximum value.

An 23rd embodiment provides the method of any one of the preceding embodiments, comprising: determining the clipped luma samples by clipping luma samples of the block, preferably by clipping for each of the one or more chroma samples reconstructed luma samples of the block.

A 24th embodiment provides the method of the 23rd embodiment, wherein determining the clipped luma samples further comprises:

- determining that a clipping of the luma samples prior to being used in the one or more cross-component processes is activated,
- determining a clipping range, and
- clipping the luma samples using the clipping range.

A 25th embodiment provides the method of the 24th embodiment, wherein the clipping range comprises a pre-defined or signaled minimum value and a pre-defined or signaled maximum value, and wherein

- a value of a luma sample is set to the minimum value, when the luma sample is below the minimum value,
- a value of a luma sample is maintained, when the luma sample is at or above the minimum value or at or below maximum value, and
- a value of a luma sample is set to the maximum value, when the luma sample is above the maximum value.

A 26th embodiment provides a method for decoding a data stream, the data stream including data representing a picture, the method comprising:

decoding from the data stream the picture,
wherein decoding the picture comprises processing one or more blocks of the pictures according to any one of the preceding embodiments.

A 27th embodiment provides a method for encoding a picture into a data stream, the data stream including data representing the picture, the method comprising:

receiving an original picture, and
encoding the picture into the data stream,
wherein encoding the picture comprises processing one or more blocks according to any one of the 1st to 25th embodiments.

A 28th embodiment provides a non-transitory computer-readable storage medium comprising instructions which, when executed by a computer, cause the computer to carry out the method of any one of the preceding embodiments.

A 29th embodiment provides an apparatus of processing one or more blocks of a picture, the apparatus comprising: a processing module, wherein the processing module is configured to predict one or more chroma samples of a block of the picture using one or more luma samples of the block and one or more cross-component processes, wherein one or more or all of the luma samples are clipped prior to being used in the one or more cross-component processes.

A 30th embodiment provides an apparatus for decoding a data stream, the data stream including data representing a picture, the apparatus comprising:

a decoder module configured to decode from the data stream the picture, and

an apparatus according to the 29th embodiment.

A 31st embodiment provides an apparatus for encoding a picture into a data stream, the data stream including data representing the picture, the apparatus comprising:

an encoder module configured to receive the original picture and to encode the picture into the data stream, and an apparatus according to the 29th embodiment.

A 32nd embodiment provides a data stream having encoded thereinto a picture, wherein the data stream comprises: a signaling enabling and/or activating, for a prediction of one or more chroma samples of a block of the picture, a clipping of one or more or all of the luma samples prior to being used in one or more cross-component processes.

The above-mentioned specific embodiments do not limit the scope of protection of the present disclosure. It is to be understood by those skilled in the art that various modifications, combinations, sub-combinations and replacements may be made depending on design requirements and other factors. Any modifications, equivalent replacements, and improvements made within the principles of the present disclosure or invention is to be included within the protection scope of the present disclosure or invention.

**References**

[1] H.264: Advanced video coding for generic audiovisual services, https://www.itu.int/rec/T-REC-H.264-202108-P/en
[2] H.265: High efficiency video coding, https://www.itu.int/rec/T-REC-H.265-202108-P/en
[3] H.266: Versatile video coding, https://www.itu.int/rec/T-REC-H.266-202008-I/en
[4] AV1 Bitstream & Decoding Process Specification, http://aomedia.org/av1/specification/
[5] Algorithm description for Versatile Video Coding and Test Model 11 (VTM 11), https://jvet-experts.org/docenduser/currentdocument.php?id=10541
[6] Algorithm description of Enhanced Compression Model 12 (ECM 12), https://jvet-experts.org/doc_end_user/current_document.php?id=13915

**Claims**

1. A method of processing one or more blocks of a picture, the method comprising:

   predicting one or more chroma samples of a block of the picture using one or more luma samples of the block and one or more cross-component processes, wherein one or more or
   all of the luma samples are clipped prior to being used in the one or more cross-component processes.

2. The method of claim 1, wherein the cross-component process receives the luma samples from a preceding process, and wherein the preceding process provides

   - clipped luma samples, or
   - non-clipped luma samples, the non-clipped luma samples being clipped at an input of the cross-component process.

3. The method of claim 1 or 2, wherein the luma samples are clipped before being input into the cross-component process in case

   - an additional processing, e.g., one or more of a filtering, resampling or down-sampling of the luma samples, is applied to the luma samples before being input into the cross-component process, and/or
   - the luma samples have not been subjected to a clipping when reconstructing the luma samples of the block.

4. The method of any one of the preceding claims, wherein the one or more cross-component processes comprise:

   - one or more cross-component predictions, preferably one or more of the following:

○ one or more cross-component linear models (CCLM),
○ one or more intra convolutional cross-component models (intra-CCCM),
○ one or more inter convolutional cross-component models (inter-CCCM), and/or

- one or more cross-component loop filters, preferably one or more of the following:

○ one or more cross-component sample adaptive offset (CCSAO) filters,
○ one or more cross-component adaptive loop filters (CCALF),
○ one or more adaptive loop filters with a convolutional cross-component model (ALF-CCCM).

5. The method of any one of the preceding claims, wherein the luma samples are adaptively clipped prior to being used in the one or more cross-component processes.

6. The method of any one of the preceding claims, comprising:
determining the clipped luma samples by clipping luma samples of the block, preferably by clipping for each of the one or more chroma samples reconstructed luma samples of the block.

7. The method of claim 6, wherein determining the clipped luma samples further comprises:

- determining that a clipping of the luma samples prior to being used in the one or more cross-component processes is activated,
- determining a clipping range, and
- clipping the luma samples using the clipping range.

8. The method of claim 7, wherein the clipping range comprises a pre-defined or signaled minimum value and a pre-defined or signaled maximum value, and wherein

- a value of a luma sample is set to the minimum value, when the luma sample is below the minimum value,
- a value of a luma sample is maintained, when the luma sample is at or above the minimum value or at or below maximum value, and
- a value of a luma sample is set to the maximum value, when the luma sample is above the maximum value.

9. The method of claim 7 or 8, wherein the clipping range is

- provided for each picture separately, e.g., by signaling the clipping range in a data stream including data representing the picture, or
- constant for a plurality of pictures or for an entire video.

10. The method of any one of claims 7 to 9, wherein the clipping range is an adaptive clipping range being content dependent, e.g., being derived from the content of the picture or the video to be coded.

11. The method of any one of the preceding claims, wherein the clipping of the luma samples prior to being used in the one or more cross-component processes is enabled through a signaling, e.g., in a data stream including data representing the picture.

12. The method of any one of the preceding claims, wherein
an activation of the clipping of the luma samples is indicated in a data stream including data representing the picture, e.g., by signaling a flag in a bitstream, and wherein the clipping of the luma samples is activated

- at a block or coding unit (CU) level for the one or more cross-component predictions, and/or
- at coding tree unit (CTU) level for the one or more cross-component loop filters.

13. A non-transitory computer-readable storage medium comprising instructions which, when executed by a computer, cause the computer to carry out the method of any one of the preceding claims.

14. An apparatus of processing one or more blocks of a picture, the apparatus comprising:

a processing module, wherein the processing module is configured to predict one or more chroma samples of a block of the picture using one or more luma samples of the block and
one or more cross-component processes, wherein one or more or all of the luma samples are clipped prior to being used in the one or more cross-component processes.

15. A data stream having encoded thereinto a picture, wherein the data stream comprises:
a signaling enabling and/or activating, for a prediction of one or more chroma samples of a block of the picture, a clipping of one or more or all of the luma samples prior to being used in one or more cross-component processes.

Fig. 1

Fig. 2

Fig. 3

Fig. 4

Fig. 5

| L1 | L0 | L2 |
|----|-----|----|
|    | C  |    |
| L4 | L3 | L5 |

Fig. 6

Fig. 7

Collocated & neighboring Y  Collocated U  Collocated V

Fig. 8

Samples from DBF

| SAO | BIF | CCSAO |

clip

Samples to ALF

Fig. 9

Fig. 10

Cross 9x9 CCALF Filter Shape       Luma Residual based Tap

Fig. 11

Fig. 12

Fig. 13

| model 0 | center | north | south | west | east | nonlinear | bias | | | | |
|---|---|---|---|---|---|---|---|---|---|---|---|
| model 1 | center | bias | | | | | | | | | |
| model 2 | center | nonli near | bias | | | | | | | | |
| model 3 | center | north | south | west | east | bias | | | | | |
| model 4 | center | west | east | nonlinear | bias | | | | | | |
| model 5 | center | north | south | nonlinear | bias | | | | | | |
| model 6 | center | north | south | west | east | north-west | north-east | south-west | south-east | nonlinear | bias |
| model 7 | center | north | south | west | east | north-west | north-east | south-west | south-east | bias | |

Fig. 14

Predicting one or more chroma samples of a block of the picture using one or more luma samples of the block and one or more cross-component processes, wherein one or more or all of the luma samples are clipped prior to being used in the one or more cross-component processes

S100

Fig. 15

Fig. 16

clipping

N
W    C    E
S

N'
W'    C'    E'
S'

Fig. 17

Luma samples — SAO Luma — ALF Luma — Filtered Luma

CCSAO Cb

CCSAO Cr

CCCM filter derivation

CCCM filtering

CC-ALF Cb — Filtered Cb

CC-ALF Cr — Filtered Cr

Chroma Cb samples — SAO Cb — +

Chroma Cr samples — SAO Cr — +

ALF Chroma

Fig. 18

Fig. 19

Fig. 20

decoding from the encoded data stream the picture

Predicting one or more chroma samples of a block of the picture using one or more luma samples of the block and one or more cross-component processes, wherein one or more or all of the luma samples are clipped prior to being used in the one or more cross-component processes

S500

S502

Fig. 21

| receiving an original picture |
|---|

S600

| encoding from the encoded data stream the picture |
|---|
| Predicting one or more chroma samples of a block of the picture using one or more luma samples of the block and one or more cross-component processes, wherein one or more or all of the luma samples are clipped prior to being used in the one or more cross-component processes |

S602

S604

| including into a data stream the coded coefficients |
|---|

S606

Fig. 22

Processing Module

Predict one or more chroma samples of a block of the picture using one or more luma samples of the block and one or more cross-component processes, wherein one or more or all of the luma samples are clipped prior to being used in the one or more cross-component processes

402

404

400

Fig. 23

Decoder module

502

Processing module

504

500

Fig. 24

702    704

encoder    ..... □□□□□□□ .....    decoder

600

700

500

Fig. 26

900

901
computing
unit

902
ROM

903
RAM

904

905
I/O interface

906
input unit

907
output unit

908
storage
unit

909
communica-
tion unit

Fig. 27

Europäisches
Patentamt

European
Patent Office

Office européen
des brevets

# EUROPEAN SEARCH REPORT

**Application Number**

EP 25 31 5014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2024/073145 A1 (BEIJING DAJIA INTERNET INFORMATION TECH CO LTD [CN] ET AL.) 4 April 2024 (2024-04-04) * paragraphs [0242] - [0266]; figures 9,16,17 * | 1-15 | INV. H04N19/11 H04N19/117 H04N19/176 H04N19/186 H04N19/593 H04N19/82 |
| X | WO 2024/022390 A1 (MEDIATEK INC [CN]) 1 February 2024 (2024-02-01) * paragraphs [0171] - [0175] * | 1-15 | |
| A | STROM JACOB ET AL: "Bilateral Loop Filter in Combination with SAO", 2019 PICTURE CODING SYMPOSIUM (PCS), IEEE, 12 November 2019 (2019-11-12), pages 1-5, XP033688183, DOI: 10.1109/PCS48520.2019.8954554 [retrieved on 2020-01-08] * page 3, paragraph III.C; figure 1 * | 1-15 | |
| A | ALSHINA(SAMSUNG) E: "EE7: Cross-check for adaptive clipping signalled w/o prediction (tests 1) and adaptive clipping as post-filter (test 3)", 4. JVET MEETING; 20161015 - 20161021; CHENGDU; (THE JOINT VIDEO EXPLORATION TEAM OF ISO/IEC JTC1/SC29/WG11 AND ITU-T SG.16) , no. JVET-D0094 6 October 2016 (2016-10-06), XP030150331, Retrieved from the Internet: URL:http://phenix.int-evry.fr/jvet/doc_end _user/documents/4_Chengdu/wg11/JVET-D0094- v1.zip JVET-D0094.docx [retrieved on 2016-10-06] * the whole document * | 1-15 | **TECHNICAL FIELDS SEARCHED (IPC)** H04N |

-/--

The present search report has been drawn up for all claims

| Place of search | Date of completion of the search | Examiner |
|---|---|---|
| Munich | 24 June 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 3

Europäisches
Patentamt

European
Patent Office

Office européen
des brevets

# EUROPEAN SEARCH REPORT

**Application Number**

EP 25 31 5014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GALPIN (TECHNICOLOR) F ET AL: "Adaptive Clipping in JEM2.0", 3. JVET MEETING; 20160526 - 20160601; GENEVA; (THE JOINT VIDEO EXPLORATION TEAM OF ISO/IEC JTC1/SC29/WG11 AND ITU-T SG.16) , no. JVET-C0040 26 May 2016 (2016-05-26), XP030247172, Retrieved from the Internet: URL:http://phenix.int-evry.fr/jvet/doc_end _user/documents/3_Geneva/wg11/JVET-C0040-v 3.zip JVET-C0040-Clipping-r2.docx [retrieved on 2016-05-26] * the whole document * | 1-15 | |
| A | S-H KIM (SHARPLABS) ET AL: "Adaptive CTU based clipping", 116. MPEG MEETING; 20161014 - 20161021; CHENGDU; (MOTION PICTURE EXPERT GROUP OR ISO/IEC JTC1/SC29/WG11) , no. m39115 6 October 2016 (2016-10-06), XP030257231, Retrieved from the Internet: URL:http://phenix.int-evry.fr/mpeg/doc_end _user/documents/116_Chengdu/wg11/m39115-JV ET-D0109-v1-JVET-D0109.zip JVET-D0109.doc [retrieved on 2016-10-06] * the whole document * | 1-15 | |

TECHNICAL FIELDS
SEARCHED (IPC)

-/--

The present search report has been drawn up for all claims

| Place of search | Date of completion of the search | Examiner |
|---|---|---|
| Munich | 24 June 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

................................................................................

& : member of the same patent family, corresponding document

EPO FORM 1503 03.82 (P04C01)

Europäisches
Patentamt

European
Patent Office

Office européen
des brevets

# EUROPEAN SEARCH REPORT

Application Number

EP 25 31 5014

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | COBAN M ET AL: "Algorithm description of Enhanced Compression Model 12 (ECM 12)", 33. JVET MEETING; 20240117 - 20240126; TELECONFERENCE; (THE JOINT VIDEO EXPLORATION TEAM OF ISO/IEC JTC1/SC29/WG11 AND ITU-T SG.16) , no. JVET-AG2025 ; m66954 29 March 2024 (2024-03-29), XP030316747, Retrieved from the Internet: URL:https://jvet-experts.org/doc_end_user/documents/33_Teleconference/wg11/JVET-AG2025-v1.zip JVET-AG2025-v1.docx [retrieved on 2024-03-29] * pages 74-86, paragraph 3.4-3.7.1 * ----- | 1-15 | |

TECHNICAL FIELDS
SEARCHED        (IPC)

The present search report has been drawn up for all claims

| Place of search | Date of completion of the search | Examiner |
|---|---|---|
| Munich | 24 June 2025 | Lombardi, Giancarlo |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 31 5014

This annex lists the patent family members relating to the patent documents cited in  the above-mentioned European search report.
The members are as contained in the European Patent Office EDP file on
The European Patent Office is in no way liable for these particulars which are merely given for the purpose of information.

24-06-2025

| Patent document cited in search report | Publication date | Patent family member(s) | | Publication date |
|---|---|---|---|---|
| WO 2024073145 A1 | 04-04-2024 | CN | 119948867 A | 06-05-2025 |
| | | WO | 2024073145 A1 | 04-04-2024 |
| WO 2024022390 A1 | 01-02-2024 | CN | 119547432 A | 28-02-2025 |
| | | EP | 4562851 A1 | 04-06-2025 |
| | | TW | 202406341 A | 01-02-2024 |
| | | WO | 2024022390 A1 | 01-02-2024 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- *Advanced video coding for generic audiovisual services*, https://www.itu.int/rec/T-REC-H.264-202108-P/en
- *High efficiency video coding*, https://www.itu.int/rec/T-REC-H.265-202108-P/en
- *Versatile video coding*, https://www.itu.int/rec/T-REC-H.266-202008-I/en
- *AV1 Bitstream & Decoding Process Specification*, http://aomedia.org/av1/specification
- *Algorithm description for Versatile Video Coding and Test Model 11 (VTM 11)*, https://jvet-experts.org/docenduser/currentdocument.php?id=10541
- *Algorithm description of Enhanced Compression Model 12 (ECM 12)*, https://jvet-experts.org/doc_end_user/current_document.php?id=13915